# EUROPEAN PATENT APPLICATION

(11) **EP 4 011 838 A1**
(43) Date of publication of application: **15.06.2022**
(21) Application number: 20213356.7
(22) Date of filing: 11.12.2020
(51) Int. Cl.: C02F 1/00, C02F 103/00, C02F 1/32, B01D 29/60, B01D 29/68

(54) **METHOD FOR CONTROLLING BALLAST WATER TREATMENT SYSTEM**

(71) Applicant: AlfaWall Aktiebolag, 147 80 Tumba (SE)
(72) Inventor: NIKZAD, Ramin, SE-74850 TOBO (SE); CARLSSON, Magnus, SE-61994 VAGNHÄRAD (SE); LAGERSTEDT, Henrik, SE-115 38 STOCKHOLM (SE); BLIXT, Jonathan, SE-117 64 STOCKHOLM (SE)
(74) Representative: Alfa Laval Attorneys

(57) **Abstract**

The present disclosure relates to a method and control unit for controlling a ballast water treatment system. In the method a prevailing operational condition value (PCV) relating to the filter unit and/or the treatment unit is determined by means of a sensing means. Based on the determined prevailing condition value, a modifying action is performed. The method further comprises, when the steps and/or are repeated during a determined time interval, tracking a trend for the development of the prevailing operational condition values and/or a frequency for the modifying actions. Based on the tracked trend, a moment in time where a critical value for the prevailing operational condition value is reached is predicted-According to the invention the ballast water treatment system is controlled by initiating the performing of the modifying action based on the prediction and/or the value for the determined prevailing condition, which ever value reaches its reference value (RVT; RV, RR) first.

## Description

### TECHNICAL AREA

The present invention relates to a method for controlling a ballast water treatment system comprising a filter unit with a backflushing arrangement comprising a backflush element, a treatment unit for neutralizing living organisms in the ballast water and a control unit. The present disclosure also relates to a computer program and a computer program product to perform the method steps. Further, the present invention relates to a control device configured to perform the method and a ballast water system comprising the control device.

### BACKGROUND

Ships may be arranged with ballast water tanks that are filled to stabilize them when the ships are not fully loaded with cargo. That is, when a ship has offloaded its cargo at a port in a first location, and then receives instructions to pick up another cargo in a port at a second location, it fills its ballast water tanks with sea water from the first location. When the ship then reaches the port in the second location, it empties the ballast water tanks for receiving new cargo. The sea water contains dirt and therefore it needs to be treated including filtration before filling the tanks and/or before emptying the tanks at the second location. Before emptying the ballast water tanks, i.e. de-ballasting, the ballast water is also treated in order to kill organisms in water. The organisms need to be killed since the transported species may be completely different from the normal species of the second position and may thus cause large ecological problems. It is well known that species that are transported from their normal environment to a new environment can cause great problems. For example, the transported species may not have normal enemies in the new environment. Alternatively, the local species may obtain diseases and be wiped out by the transported species, etc.

It is estimated that about 3-5 billion tons of ballast water is transported around the world. Therefore, the International Maritime Organization of UN has issued a convention that puts demand on all commercial ships to be equipped with and use special systems for handling ballast water. In treating ballast water in ships, it is very important that that no untreated water can leave the ship. Therefore, it is important that the treatment equipment operates in a way that it should and therefore it is controlled and monitored so that a safe and optimal function are ensured. Further, it is important to be able to indicate malfunction of different parts of the system so that appropriate measures can be taken. Also, the safety of the ship must be ensured.

Filters are used in many areas and applications for filtering out solids and microorganisms in fluids. One application area is systems for treating ballast water in ships. The sea water to be treated in ballast water systems may contain large organisms and other matter that should not enter the ballast water treatment system. Therefore, the ballast water treatment systems can comprise filter arrangements with filters, which are positioned on the inlet piping of the ballast water system. The filters may contain fine meshed filter plates or cylinders effectively filtering out matter that is larger than the size of the mesh. To have a proper function of the filter, the filter or filters must be cleaned periodically. One method of cleaning filter elements is backflushing the filter to remove larger matter that has been filtered out. The filter may be backflushed when the ballasting has been performed or the ballasting may be interrupted by the backflushing. The back-flushing liquid used during or directly after ballasting may be discharged back to the sea, since the water is discharged near the same location it was provided to the system. If the filter is also to be used during de-ballasting, the used backflushing liquid must be either pumped back to the same place as the ballasting was done or be treated.

It may be challenging to design and produce a filter that can handle all types of water and dirt load. The dirt load is directly connected to the design of a mesh of the filter. Self-cleaning filter devices generally rely on the liquid pressure and velocity to clean the filter media/mesh. This limits the use of the system in high dirt load. A self-cleaning filter device must be sized, considering both pressure budget limitations and contaminant loading limitations. Contaminant loading consideration manifests themselves in their effects on the filter area, backflush interval and type of backflush system. The minimum practical interval between backflush cycles must be at least long enough to permit the filter to be backflushed, plus allow for an abnormally high contaminant loading. There is also an actual dirt holding capacity for a particular liquid contaminant combination. In addition, there is also backflushing efficiency which is a function of the liquid contaminant combination the backflush rate and other factors. These parameters all combine to give a filter capacity and area.

The filtered water may be further treated with different types of treatment units that neutralize living organisms. Examples of treatment units are UV-reactors, and chemical treatment units which further purify the sea water. For example, in UV-reactors the sea water is subjected to UV radiation generated by one or more UV lamps emitting certain wavelengths, which lamps are operated by drive units. The power of these lamps is high and requires a lot of power from the drive units, which in turn results in that they generate a lot of heat. However, the UV-intensity of the UV lamps is degraded over time, which results in that the UV-reactor efficiency may degrade and will no longer effectively and sufficiently treat and clean the ballast water. When the UV-intensity is decreased below a critical level, the lamps must be replaced by new UV lamps. In chemical treatment units it must be ensured that sufficient amount of chemicals is provided to neutralize the living organisms e.g. by oxidizing reaction. If the oxidizing reaction is not sufficient to neutralize living organisms, more chemicals need to be added.

When treating ballast water in marine vessels, it is important that ballasting and deballasting are performed such that no untreated water can leave the marine vessels. Therefore, it is important that the ballast water pumping equipment as well as the treatment equipment are controlled and monitored so that a safe and optimal function is ensured. Further, it is important to be able to indicate malfunction of different parts of the system so that appropriate measures can be taken and that the safety of the vessel is not endangered. Thus, it must be ensured that ballast water treatment system with filtering and purifying equipment will operate in a robust and safe manner.

There have been attempts to improve for example the continuous operation of such self-cleaning filters by improved control, wherein US3574509 discloses an example. Document US2009321365 A1 discloses a system of water treatment comprising a UV radiation means for treating contaminated ballast water. The system includes a control unit capable of controlling and monitoring of the system for ensuring that no untreated water leaves the system in an uncontrolled manner.

However, despite previous attempts to improve the operation of the systems, there is still room for further improvements, especially in view of harder environmental regulations regarding ballast water.

### SUMMARY OF THE INVENTION

The objective of the present invention is to further improve the control of a ballast water treatment system so that the operational time of the ballast water equipment in the system can be extended and the stop times for maintenance can be minimized. A further objective is to improve the control of self-cleaning filter arrangements in ballast water treatment systems so that a prolonged continuous operation of the filter can be obtained. A yet another objective is to improve the control of the UV treatment so that prolonged operational time of the UV-reactor can be obtained. Further, it is an objective to prevent a premature clogging of the filter.

The objectives are attained by the invention according to the present disclosure and as further defined in the appended claims. Especially, the objectives are attained by a method for controlling a ballast water treatment system comprising a filter unit with a backflushing arrangement comprising a backflush element, a treatment unit for neutralizing living organisms in the ballast water and a control unit configured to control the operation of the ballast water treatment system. The method comprises
- determining a prevailing operational condition value (PCV) relating to the filter unit and/or the treatment unit by means of a sensing means,
- performing a modifying action in the ballast water treatment system, based on the determined prevailing condition value,
- tracking a trend for the development of the prevailing operational condition values and/or a frequency for the modifying actions when the steps and/or are repeated during a determined time interval,
- predicting a moment in time where a critical value for the prevailing operational condition value is reached based on the tracked trend in the step, and
- controlling the ballast water treatment system by initiating the performing of the modifying action based on the prediction and/or the value for the determined prevailing condition, which ever value reaches its respective reference value first.

By the present method, many advantages may be obtained. The operational time may be prolonged, since not only the prevailing condition, but also a prediction of the development of the prevailing condition may be used in controlling the system. At the same time, safe use of the system is ensured, since the control may use either the prevailing condition or the predicted prevailing condition, which ever reaches its respective reference value first, as a base for the control decision.

The method may further comprise between the first and second steps defined above:
- receiving the determined prevailing condition value in the control unit,
- comparing the determined prevailing condition value with the reference value, which may be a reference range, for the prevailing condition in the control unit,
- performing the step of modifying action based on the comparison when the prevailing operational condition value differs from the reference value.

By performing the steps above, the method may be made more accurate.

The step of determining the prevailing condition may comprise determining a differential pressure over the filter unit. Additionally or alternatively, power signals in the backflushing arrangement may be used.

The modifying action may comprise initiating a backflushing operation when the determined differential pressure differs from the reference differential pressure, i.e. is larger than, but does not reach a critical value for the differential pressure.

Further, the step of determining the prevailing condition may further comprise determining a prevailing time between backflushing operations in the filter unit when the backflushing steps are repeated.

The step of controlling the backflushing may comprise increasing the rotational speed of the movable backflush element the higher the predicted and/or the determined differential pressure is, and/or decreasing the flow rate of the ballast water through the filter the higher the predicted and/or the determined differential pressure is.

Thus, by controlling the filtration process and the backflushing operation, the operational time of the filter arrangement may be prolonged while the system is configured so that safe use is ensured. For example, when the control of the inlet flow to the filter unit is based both on a prediction of differential pressure value over the filter over time and the determined prevailing differential pressure value in parallel, so that if any of these two indicators suggests a decreased flow, the flow will be decreased. The modifying action may be done in a preventive manner, e.g. the rotational speed of the backflushing element or nozzle can be increased already before it is required, whereby the clogging of the filter may be prevented. In the same way, the flow through the system may be decreased to prevent clogging of the filter.

In a further alternative, when the treatment unit is a UV-reactor comprising one or more UV-lamps, the step of determining the prevailing operational condition may comprises determining UV-intensity of the UV-reactor.

The modifying action in the step may comprise decreasing the flow rate through the UV-reactor, the lower the predicted and/or the determined UV-intensity is.

Additionally, in case any of the UV-lamps has decreased UV-intensity, the flow through the UV-reactor may be decreased to prevent that untreated water will pass the UV-reactor. On the other hand, in case the determined differential pressure is higher than the predicted differential pressure, the system is controlled such that either the flow is decreased, or the rotational speed of the backflush element is increased, for example. In this way it is possible to prevent operational disturbances and prolong the intervals for cleaning and maintenance.

The step of prediction may be based on linear and/or non-linear regression. In this way simple calculation may be obtained.

The present invention also relates to a computer program comprising a program code for causing the control unit or a computer connected to the control unit to perform the steps above.

The present invention also relates to a computer program product comprising a program code stored on a computer-readable medium for performing the method steps defined above, when said computer program is run on a control unit or a computer connected to the control unit.

The objectives above are also attained by a control unit configured to control the ballast water treatment system with the method steps as defined above. The control unit may be arranged on board the ship or it may be remotely connected to the ship.

The objectives above are also attained by a ballast water treatment system comprising or being connected to the control unit as defined above.

Further aspects of the invention are apparent from the dependent claims and the description

### BRIEF DESCRIPTION OF THE DRAWINGS

Further objects, features and advantages will appear from the following detailed description of several embodiments of the invention with reference to the drawings, in which:
Fig. 1 is an example of a ballast water treatment system 1 including a ballast water filter arrangement 10 shown during ballasting.
Fig. 2a is an example of a ballast water filter arrangement during filtration.
Fig. 2b illustrates the ballast water filter arrangement of Fig. 2a during backflushing.
Fig. 3 is a flow chart illustrating the steps of the method of the present disclosure.
Fig. 4 is an illustrates development of differential pressure PD over time with a prediction line.
Fig. 5 schematically illustrates a control device or computer according to an embodiment.

### DETAILED DESCRIPTION

The ballast water treatment systems are arranged to treat sea water before discharging ballast water back to sea. During ballast operation (ballasting), sea water is pumped from the sea and led through a filter, which removes larger particles and organisms. After filtration the sea water is then supplied to a treatment unit for neutralizing living organisms in the ballast water. By neutralizing is meant rendering the living organisms non-viable or dead.

There are several types of treatment units that can be used downstream of the filter unit on the market. For example, chemical treatment units in which the living organisms are oxidized to neutralize them can be used. An example of such system is an electro-chemical system in which electro chlorination is used for producing oxidizing disinfectants from sea water. Before discharging the ballast water back to the sea, the total residual oxidant content (TRO) needs to be below an acceptable level for discharge. TRO can be decreased for example by the addition of sodium thiosulphate. Managing the TRO levels needs determination of the TRO by means of a sensor.

Another example of a treatment unit is a UV-reactor comprising one or more UV-lamps, where the water is treated with UV light. In the UV-reactor UV-lamps radiate the sea water with high intensity. The UV lamps may be powered by lamp power supplies in a lamp drive cabinet. It is important that the UV-lamps have high intensity, and therefore the UV-reactor needs to be cleaned in between ballast operations to remove any dirt or scaling. The reactor can be cleaned for example by using a cleaning in place (CIP) operation module. When cleaned, the reactor is first rinsed with fresh water, and then a cleaning liquid is circulated through the reactor. At the end of the process the reactor can be filled with fresh water.

The UV-reactor and ongoing processes can be controlled and monitored by a control unit. The control can also be performed from remote control panels and/or the vessel's integrated or main control system, for example via remote interface.

Fluid flow in the ballast water system can be monitored by one or more flow meters and regulated by means of one or more control valves, which may be connected to the control unit.

During ballasting, the ballast water treatment system is started. In case a UV-reactor is used, the UV-lamps in the reactor are heated. When the lamps are ready, the ballast water pump is started, either by an operator or automatically. The ballast water is then pumped from the sea chest to the filter, which removes larger particles and organisms. This also reduces the amount of sediment build-up in the ballast water tanks. The organisms and sediments caught in the filter are flushed overboard via regular filter backflush operations. After filtration, the water is fed to the UV-reactor, in which the living organisms are neutralized. If the UV-intensity of one or more lamps in the reactor fall below minimum, the treatment may be continued but a system alert may be created. However, to ensure that treatment requirements can be fulfilled with the lower intensity, the process may be modified so that the flow is decreased. If the reduction of the flow is not sufficient, it is possible to increase the intensity of the lamps. If these actions are not sufficient, the treatment operation may have to be stopped.

To keep the filter of the ballast water treating system clean, it can be automatically backflushed. The backflush operation can be performed during ongoing process without interrupting the ballasting process. The backflushing does not have to interrupt the filtration process, if only a part of the filter element area is cleaned. The areas that are not cleaned at a specific time can continue the filtration of the ballast water. It is also possible to start backflush manually from the control system. When the ballast operation is stopped, the backflush can be performed before the system comes to a full stop. The water used for backflushing can be returned to the sea directly at the ballasting site. To secure efficient filtration, the backflush operation is performed at determined time set intervals or it may be triggered by indication of dirt in the filter. Pressure drop over the filter, i.e. differential pressure, can be monitored by pressure transmitters on the filter inlet and outlet. Dirt can be detected by an increased differential pressure caused by particles in the filter. When the differential pressure reaches a parameter reference value, an automatic backflush operation starts.

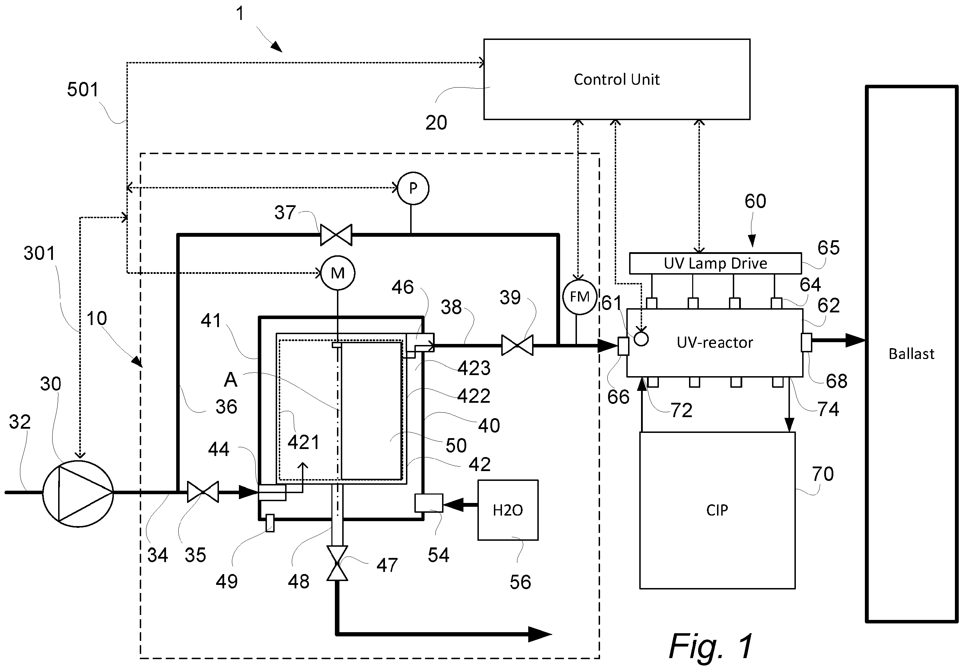

Reference is now made to Fig. 1, in which an example of a ballast water system 1 according to the present disclosure is schematically shown as a flow chart.

The ballast water treatment system 1 includes a ballast water filter arrangement 10 and Fig. 1 shows the system during ballasting. The ballast water treatment system 1 is controlled by a control unit 20. During ballasting sea water is pumped by means of a ballast water pump 30 through a sea water inlet 32. By ballasting is meant a process by which sea water is taken into a ship when the ship is e.g. at a port or at sea. The purpose of the ballast water carried in ballast tanks is to ensure the stability of the ship. De-ballasting is a process by which sea water is taken out of the ship when the ship is at the port or at the sea. The ballast tanks are connected to a piping system and ballast pumps to carry out the ballasting and deballasting operations.

The ballast water pump 30 is controlled by the control unit 20 and can be arranged connected to the control unit via a two-way physical or wireless connection 301. The ballast water pump 30 may be arranged upstream or downstream of the ballast water filter arrangement 10. In the illustrated Fig. 1, the pump 30 is arranged upstream of the ballast water filter arrangement 10.

Sea water is pumped to the filter unit 40 via a filter unit inlet line 34. The inlet line 34 may comprise a first closing valve 35 to stop the flow through the filter, e.g. in case of failure. During a normal ballasting operation however, the sea water is fed through the inlet line 34 to a water inlet 44 of the filter unit 40. The filter arrangement 10 may comprise a by-pass line 36 including a closing valve 37. The by-pass line 36 may have a line branch upstream of the closing valve 35. The filter arrangement 10 further comprises a water outlet line 38 in fluid connection with a filter outlet 46. Downstream of the filter outlet 46, a further, third closing valve 39 may be located. A second branch of the by-pass line 36 may be connected to the outlet line 38 downstream of the third closing valve 39, and upstream of a treatment unit, which in this illustrated example is a UV-reactor 60.

The filter unit 40 comprises a filter element 42 with an inlet side 421 and an outlet side 422. The filter element can be surrounded by a filter unit housing 41. The filter element 42 is not displayed in detail in the schematic drawing of Fig. 1. However, the filter element may be of any known type and may comprise for example a filter media which is inserted between two or more hollow cylindrical filter element housings, i.e. inner and outer filter element housings. Each of the housings may have perforated cylinder wall to assist in filtering while allowing the water to flow through. The filter media may be of any known type and may e.g. comprise a screen of polymeric material, such as polypropylene-based material, and/or metallic or ceramic material. The screen has a suitable mesh size, which is adapted for sea water filtration. Suitably, the filter element comprises materials that are corrosion resistant and suitable for use in saline sea water conditions. The filter element can be adapted to filter both living organisms as well as waste, such as plastic, from the sea water. The inner and outer filter media housings may have for example a circular cylindrical shape, although other shapes may be conceivable.

As schematically shown in Fig. 1, the inlet side 421 of the filter element 42 is arranged in fluid communication with a filter unit inlet line 34 through which unfiltered sea water is pumped during ballasting in a first flow direction to the filter unit 40. The first flow direction is depicted by arrows in Fig. 1. The unfiltered sea water may according to a variant be fed into the filter unit 40 via a filter inlet 44 located at a bottom of the filter unit 40. The filter inlet 44 is adapted to lead the flow of unfiltered sea water radially inwards of the filter element 42, i.e. close to a centrum axis A of the filter unit 40. The water flow may be arranged in a tangential way so that the sea water passes the filter element in a direction from the inlet side 421 to the outlet side 422, which is located radially outwards from the inlet side 421. All matter having a size larger than a mesh size of the filter element will be trapped in the filter element. This means that the filter element will become clogged by the trapped material unless it is cleaned at certain intervals. The cleaning may be performed by backflushing, e.g. when the ballasting is performed or at pre-determined intervals. The filter unit 40 further comprises a filtered sea water outlet 46 through which the filtered water is arranged to flow, and a backflush outlet 48, which is equipped with a fourth closing valve 47. Further, a freshwater inlet 54 for fresh water, which may be provided from a freshwater tank 56, and a drain outlet 49 may be included in the system.

The filter arrangement 10 of the present disclosure is self-cleaning and comprises a backflushing arrangement 50 with a movable backflush element 55. The backflush element 55 is configured to move over the filter element 42 and the inlet side 421 thereof, and remove material trapped thereto. During a backflushing mode of the filter device, the fluid flow direction is temporarily reversed.

The movable backflush element 55 is configured to rotate around an axis of rotation, which corresponds to the center axis A of the filter unit 40. The backflush element 55 is driven by a variable speed motor M, which may be a geared motor, which is configured to drive a rotational movement of a backflush element 55. The gear speed may be for example from 15-50 RPM, but is not limited thereto. The gear ratio may be for example 1/70, but is not limited thereto. The variable speed motor M is connected to the control unit 20 and may be controlled by the control unit 20. For example, the control unit 20 may include an inverter inside the unit 20, which is configured to control the rotation speed of the motor. The motor may also be a standard motor controlled by an inverter included in the control unit 20. The standard or geared motor can be arranged connected to the control unit via a two-way physical or wireless connection 501.

The filter arrangement 10 further comprises one or more sensing means P configured to sense differential pressure PD between the inlet side and the outlet side of the filter element. In the drawing, the sensing means is schematically illustrated as one element, but pressure sensors may be provided both at the inlet and the outlet of the filter. The sensing means P is connected to the control unit 20. Increase of the differential pressure PD, when e.g. compared to a reference differential pressure P_{Ref} may lead to performing backflushing operation, and/or decrease of flow rate through the filter unit or the ballast water treatment system 1. The control unit may be additionally configured to control the rotational speed of the movable backflush element 55 based on the sensed differential pressure and/or the inlet flow of seawater. By having the control unit 20 configured to control the rotational speed of the movable backflush element based on the sensed differential pressure and/or the inlet flow of seawater, it is possible to control the rotational speed of the backflush element based on the level of dirt in the filter unit. That is, the rotational speed may be faster the higher the differential pressure, or the lower the flow and vice versa.

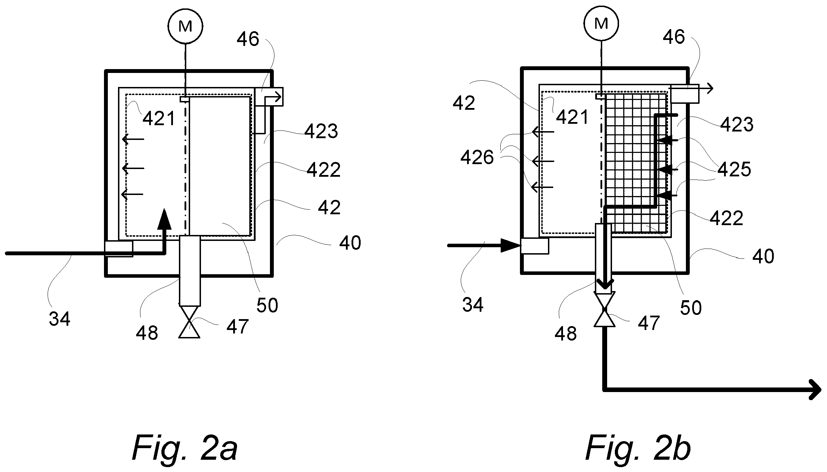

In Fig. 2a a filter unit 40 is shown schematically during filtration, i.e. normal ballasting operation. The water enters from the inlet line 34 and flows through the filter element 42 from the inlet side 421 to the outlet side 422. The filtered dirt is trapped on the inlet side 421 of the filter element 42. The filtered water passes the chamber 423 and flows out from the filter through the outlet 46 and is lead into the ballast tank. During filtration, the filter operates as a static filter, there are no moving parts and the motor M is not running and the backflush element 55 is standing still.

At backflush shown in Fig. 2b, the motor M starts to drive the backflush element 50. At the same time, the fourth closing valve 47, i.e. a backflush valve 47 opens. The backflush element 55 rotates inside the filter element 42. The dirt on the inlet side 421 of the filter element is cleaned by a high-efficacy backflush flow in front of the nozzle, as indicated by arrows 425. The backflush flow uses filtered water from the chamber 423 to clean the filter from the outlet side 422 to the inlet side 423. The water, together with the dirt, is lead via the backflush element 55 through the backflush outlet 48 and out via the backflush valve 47.

All areas of the filter element that are not in front of the backflush element 55 are filtering as indicated by arrows 436 and the arrow at the outlet 46. shown in Fig. 2a. When the backflush is done, e.g. after approximately 20 seconds, the motor stops, and the backflush valve 47 is closed. The filter then goes back to filtration with full flow to the ballast tank. If the backflush operations are triggered to be performed frequently, the control unit may start a backflushing operation which is continuous. This may happen over time when the filter element will undergo a long-term build-up of particles that are not removed by backflushing. One effect of this is that the differential pressure will increase over time. The extent of the long-term dirt build-up is dependent on the water conditions. However, in case the vessel is trading in very muddy waters it might be necessary to clean the filter element more often. If the pressure triggered backflushing is performed with short intervals, the filter element should be manually cleaned. This cleaning is laborious and there is a need to decrease the intervals for manual cleaning. This objective can be obtained by the present method, which will be described more in detail below.

The ballast water treatment system according to the present example in Fig. 1 further comprises a UV-reactor 60 as a treatment unit. The treatment unit could be a chemical treatment unit, as explained above. The UV-reactor comprises in Fig.1 a reactor vessel 62 including a plurality of UV-lamps 64, only one of which is depicted with a reference sign. The lamps 64 are in turn connected to a lamp drive cabinet 65, which gives power to the UV-lamps in the UV-reactor. The filtered sea water is treated in the UV-reactor, where the UV-light inactivates cell DNA to neutralize living organisms by preventing regrowth of organisms. The UV-light also generates radicals. The radicals are extremely reactive and react instantaneously with microorganisms and other organic contaminants destructing their membranes. The radicals are short-lived and exist only for some milliseconds. This means that they will only exist inside the UV-reactor. The quantity of radicals produced in the reactor is sufficient to treat the water as it passes through the reactor. Therefore, there are no chemical substances added to the treatment process, and there are no toxic residuals created. Since the water is not affected chemically there is no hazardous environmental impact. For example, the treatment process does not influence corrosion.

The UV-reactor 60 further comprises a ballast water inlet 66, and a ballast water outlet 68, fresh water and/or cleaning liquid inlet 72 and outlet 74, and one or more sensors 61 configured to detect the UV-intensity provided by the lamps 64 in the reactor. The number of lamps may vary, and may be for example from 10-30, e.g. 20 lamps. The UV lamps are enclosed in individual quartz-glass sleeves.

When the lamps are lit, they may get very warm. Therefore, they are usually cooled whenever they are lit. To secure that there is sufficiently ballast water to be purified in the reactor when the lamps are lit, each reactor may be equipped with a level sensor and/or switch. The level switch may also secure that sufficient level of cleaning liquid is pumped into the reactor during the cleaning-in-place (CIP) process. To secure that the lamps are adequately cooled by the ballast water, each UV-reactor may be equipped with a temperature sensor or switch (not shown). The sensor may be connected to the control unit 20 which may be configured to shut down the reactor at a pre-determined temperature, e.g. about 60 °C. The reactor may also comprise a switch which automatically shuts the reactor if the temperature is higher than a determined temperature, e.g. about 65-70 °C.

The reactor may also comprise one or more UV sensors 61, which monitor the UV lamp efficiency in relation to the water transmittance inside the UV-reactor. Based on this input, the power to the UV-lamps can be regulated between 50 and 100 % of full capacity. The UV lamps may be dimmed to lowest possible level, where they are still effective.

The lamp drive cabinet 65 containing lamp power supplies powers the UV-lamps in the UV-reactor connected to the lamp drive cabinet 65. The lamp drive cabinet 65 may be connected remotely to the UV-reactor 62. The lamp power supplies may be also configured to monitor the function of each UV lamp and take an action if a fault occurs. The lamp drive cabinet 65 may be equipped with a cooling system to maintain correct operating temperature.

The ballast water treatment system 1 further comprises the control unit 20, which can be used to control and monitor the entire system. The control unit 20 may also be used to communicate with the vessel's other systems and components, if integrated. The control unit may be integrated with remote interfaces. The control unit may comprise an integrated control panel at the same location or at a remote location. The control system may be used to set parameters, operate, and monitor the ballast water treatment system.

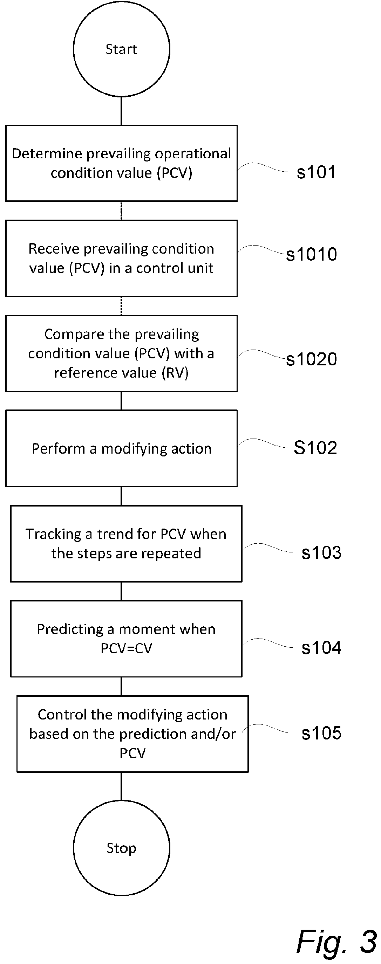

The present invention relates especially to a method for controlling the ballast water system as described above. Reference is made to Fig. 3 in which the steps of the method are illustrated. The method comprises as a first step s101 determining s101 a prevailing operational condition value PCV relating to the filter unit 40 and/or the treatment unit 60 by means of a sensing means. The prevailing condition may be for example differential pressure PD over the filter unit 40, and it may indicate the level of dirt in the filter. The differential pressure PD may be determined by means of one or more pressure sensors P. Additionally, the prevailing condition may be output power signals from the variable speed motor. In case of abnormal power peaks, they may indicate mechanical failure of the backflushing element or high dirt load in the filter unit. Alternatively, or additionally, the UV-intensity of the UV lamps may be a prevailing condition. The UV-Intensity may be measured by means of UV-sensors. Other prevailing conditions may also be determined, the ones described above being examples of such conditions.

In the next step s1010, the determined value for the prevailing condition may received in the control unit 20. In the control unit the determined value for the prevailing condition can be compared with a reference or set point value (RV) or a reference range (RR) for the prevailing operational condition in a step s1020. The reference values may be for example reference values set during commissioning of the system or the reference values may be set by a manufacturer of the devices, e.g. the UV-lamps.

Based on the determined prevailing condition value (PCV), for example in case the determined prevailing condition value differs from the reference value, a modifying action is performed. The modifying action means that the process is modified in some way compared to a previous or normal operating condition. For example, if the prevailing differential pressure is larger than a reference value RV but lower than a critical value CV for the differential pressure, a backflushing operation is performed. Alternatively, the frequency of the backflushing operations may be increased. Alternatively, or additionally, the rotational speed of the backflushing element or nozzle may be varied, depending on the indicated differential pressure. Alternatively, or additionally, the flow rate in the process may be modified, e.g. by lowering the flow through the filter and the treatment unit 60.

In case the treatment unit is a UV-reactor and if the UV-intensity in the UV-reactor is lower than a reference value RV, the intensity of the lamps in the UV-reactor may be increased and/or the flow rate through the reactor may be decreased. These modifying actions are examples, and other types of modifying steps may be performed.

The method further comprises tracking (s103) a trend for the development of the prevailing operational condition values (PCV) and/or a frequency for the modifying actions when the steps (s101) and/or (s102) are repeated during a determined time interval. The determined time interval may for example be the duration of one or more complete ballasting operations, or only parts thereof.

According to the present invention, a moment or point in time where a critical value CV for the prevailing condition is reached is predicted in a step s104 based on the tracked trend. For the prediction, an algorithm based on linear and/or non-linear regression may be used, whereby a simple calculation method is obtained.

In the step s105, the ballast water treatment system is controlled by initiating the performing of the modifying action based on the prediction and/or the value for the determined prevailing condition, which ever value reaches its reference value first.

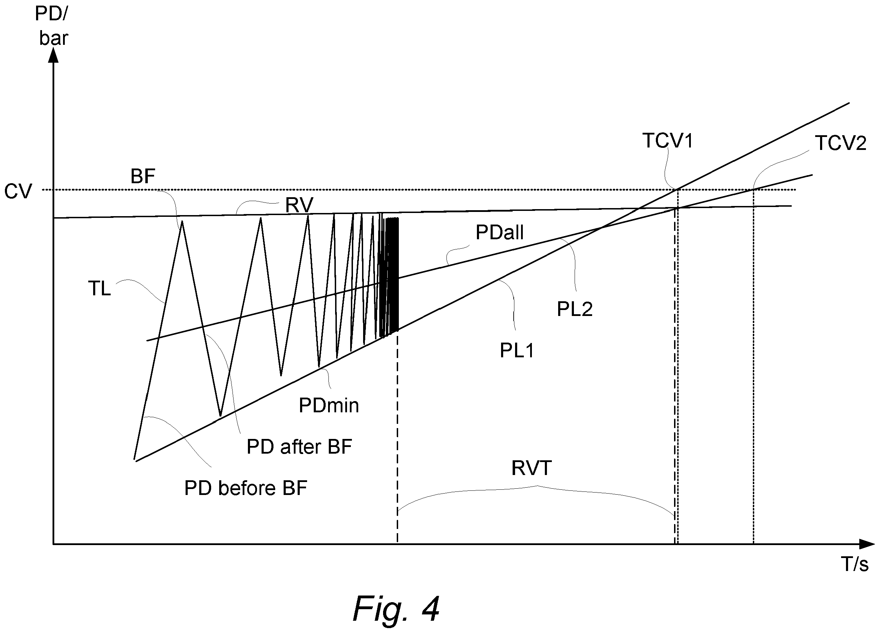

Fig. 4 illustrates a simplified and non-limiting example of prediction of a moment or point in time TCV1 or TCV2 when a critical value CV for the differential pressure PD over a filter unit is reached. TL illustrates a track line which tracks the development of differential pressure PD over time and the development of the differential pressure PD both before and after backflushing BF. The backflushing BF operation is triggered when a reference value RV for the differential pressure PD is reached. When the backflushing BF is performed, the differential pressure drops and then starts to increase again. It can be seen that the minimum value for the differential pressure PDmin increases over time and there is a need to perform backflushing BF at shorter intervals due to the increase. The increase may be caused by an increased clogging level of the filter element. At a certain point, there is a need to perform the backflushing continuously. There may be a risk that despite the continuous backflushing, the differential pressure PD still increases. In that case other modifying actions, e.g. a faster rotational speed of the backflushing element and/or decreased flow, may be initiated.

A prediction line PL1 is in Fig. 4 example based on the minimum differential pressure PDmin, and may be used to predict when at the point in time TCV1 the differential pressure reaches a critical value CV. Alternatively or additionally, a prediction line PL2 based on all tracked data points may be used to predict when at the point in time TCV2 the differential pressure reaches a critical value CV. It can be seen that the points in time TCV1 and TCV2 are different depending on the different coefficients of the prediction lines PL1 and PL2. It may be advantageous to use the line with a larger coefficient to be sure that modifying actions are started in good time before the critical value CV is reached. When the critical value CV is reached the filter needs maintenance, e.g. cleaning manually.

According to the present invention it is possible to initiate the modifying action based on the moment when the determined prevailing operational condition value PCV reaches a reference value RV for the differential pressure PD. It is also possible to use in parallel a reference value in time RVT indicating a remaining time before the critical value CV for the differential pressure is reached. The reference value for the time limit RVT is a point in time on the prediction line after the tracking has ended and before the point in time when the critical value is reached, TCV1 or TCV2 in the illustrated example. RVT may be for example set 30 min before the critical value TCV1 is reached, based on the inclination of the prediction line PL1. Alternatively, the reference value for the time limit RVT may be for example 45 min before the critical value TCV2 is reached, based on the inclination of the prediction line PL2. The reference value RVT may be the same or different for the respective prediction lines PL1 and PL2.

The reference value RVT can be used to decide the moment or point in time for initiating the modifying action, e.g. backflushing, which may be continuous, and/or other modifying actions. Thus, for example, if the reference value for the time limit RVT before the critical value TCV1 or TCV2 for the differential pressure is reached is 30 minutes, a backflushing operation is initiated even if the prevailing condition PCV were below a reference value for the prevailing differential pressure RV. Alternatively, the modifying action is initiated when the reference value for the differential pressure RV is reached, even if the reference value for the predicted point in time RVT when the critical value for the differential pressure were not reached. Thus, in the step s105 of the present method, the ballast water treatment system is controlled by initiating the performing of the modifying action based on the prediction and/or the value for the determined prevailing condition, which ever value reaches its respective reference value first.

By performing the backflushing operation according to the prediction line PL1 or PL2 before the reference value for the differential pressure RV is reached, a premature clogging of the filter may be prevented. This is since when the differential pressure increases, it will be more difficult to clean the filter by backflushing, which causes clogging of the filter. When the differential pressure can be kept at as low level as possible over time, the cleaning of the filter will be easier.

Thus, by using the prediction, it is possible to perform a modifying action already before the determined or sensed value for the prevailing operational condition indicates a need for the modifying action. For example, the modifying action in the step s104 may comprise a backflushing operation when the determined differential pressure differs from the reference value but does not reach a critical value for the differential pressure. In this way it is possible to inhibit for example premature clogging of the filter, and thus prolong the operation time of the filter.

The step s101 of determining the prevailing condition may further comprise determining a prevailing time between backflushing operations in the filter unit when the backflushing operations are repeated. By determining the time between the backflushing operations, it is possible to predict a point in time for the next backflushing operation. It is then possible, for example, to perform the operation sooner than at a set interval, for example if the sea water comprises a large amount of particulate matter. In this way, premature clogging of the filter may be prevented.

The step of controlling s105 may comprise increasing the rotational speed of the movable backflush element 55, e.g. the higher the determined differential pressure (PD) is and/ or the sooner is the predicted point in time, when the critical value for the differential pressure is reached. Alternatively, or additionally the step may comprise decreasing the flow rate of the ballast water through the filter the higher the determined differential pressure (PD) is and/ or the sooner is the predicted point in time, when the critical value for the differential pressure is reached. By increasing the rotational speed of the backflush element when the differential pressure increases indicating an increasing dirt load, the intensity of the cleaning operation may be increased and thus the operational time of the filter may be further increased. This may be especially advantageous if the backflushing operation is performed continuously, i.e. the time between the backflushing operations is zero, e.g. if the sea water has a high content of particulate matter.

In addition to determining the differential pressure and the flow rate, or alternatively to these, the step s101 of determining the prevailing operational condition may comprise determining UV-intensity, provided one or more UV-lamps, in the UV-reactor. The UV-intensity indicates how effectively the lamps can inactivate the living organisms in the sea water. In case of lower intensity than a reference intensity, the modifying action in the step s105 may comprise decreasing the flow rate through the UV-reactor. In this way the load in the UV-reactor may be decreased, whereby sufficient inactivation may be obtained. The prediction using a tracked trend for the UV-intensity may be performed in an analogous manner as explained above in connection with differential pressure over the filter unit. In this prediction, the UV-intensity is tracked over time and the UV-intensity data is used for the prediction line for the development of the UV-intensity until a critical value is reached. The flow rate and/or intensity increase may be used as modifying actions. When the critical value is reached the UV-reactor requires maintenance and/or replacement of one or more UV-lamps.

By the present method, many advantages relating to the prolonged operational time of the system may be obtained while the system is configured so that safe use is ensured. For example, when the control of the inlet flow to the filter unit is based both on the determined prevailing differential pressure value and the prediction line for the differential pressure value over time, and these are used in parallel so that if any of these two indicators suggests a decreased flow, the flow will be decreased. In this way the modifying action may be done in a preventive manner, e.g. the rotational speed of the backflushing element or nozzle can be increased already before it is required, whereby the clogging of the filter may be prevented. In the same way, the flow through the system may be decreased to prevent clogging of the filter. Additionally, in case any of the UV-lamps has decreased UV-intensity, the flow through the UV-reactor may be decreased to prevent that untreated water will pass the UV-reactor. On the other hand, in case the determined differential pressure is higher than the predicted differential pressure, the system is controlled such that either the flow is decreased, or the rotational speed of the backflush element is increased, for example. In this way it is possible to prevent operational disturbances and prolong the intervals for cleaning and maintenance.

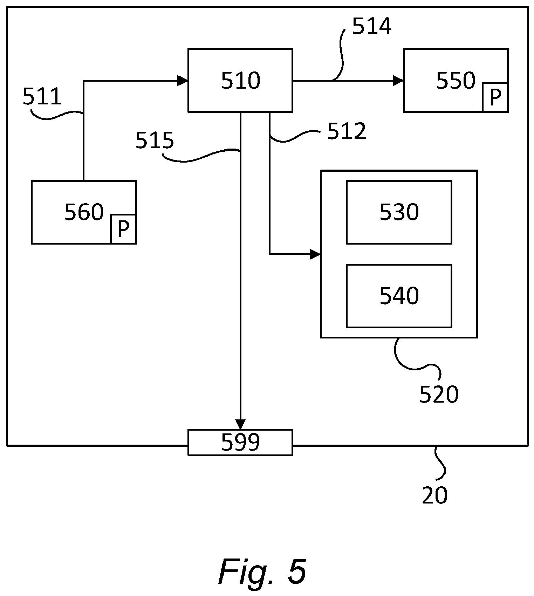

Figure 5 schematically illustrates a control unit 20. The control unit 20 may comprise a computer, or a computer may in a version comprise the control unit 20. The computer may be a dedicated computer or a server or part of a cloud comprising several servers. The term "connected to" refers herein to a communication link which may be a physical connection such as an optoelectronic communication line, or a non-physical connection such as a wireless connection, e.g. a satellite link, radio link or microwave link. The control unit may be located onboard a ship or at a remote location.

The control unit 20 may comprise a non-volatile memory 520, a data processing unit 510 and a read/write memory 550. The non-volatile memory 520 has a first memory element 530 in which a computer program, e.g. an operating system, is stored for controlling the function of the control unit 50. The control unit 20 further comprises a bus controller, a serial communication port, I/O means, an A/D converter, a time and date input and transfer unit, an event counter, and an interruption controller (not depicted). The non-volatile memory 520 has also a second memory element 540.

There is provided a computer program P which comprises routines for a method for controlling a ballast water treatment system 1 according to the invention. The computer program P comprises routines for determining a prevailing operational condition value (PCV) relating to the filter unit (40) and/or the treatment unit (60) by means of a sensing means. The computer program P comprises routines for performing the modifying action based on the comparison in which the prevailing operational condition value (PCV) differs from the reference value (RV) or the reference value range (RR). The computer program P may comprise routines for receiving the determined value for the prevailing condition in the control unit. The computer program P may comprise routines for the determined prevailing condition value (PCV) with a reference value (RV) or a reference range (RR) for the prevailing condition in the control unit. The computer program P my comprise routines for performing the modifying action based on the comparison in which the prevailing operational condition value (PCV) differs from the reference value (RV) or the reference value range (RR. The computer program P comprises routines for tracking a trend for the development of the prevailing operational condition values (PCV) and/or a frequency for the modifying actions when the steps to determine a prevailing operational condition value (PCV) and perform a modifying action in the ballast water treatment system, are repeated during a determined time interval. The computer program P comprises routines for predicting a moment in time where a critical value (CV) for the prevailing operational condition value (PCV) is reached based on the tracked trend in the step (s103). The computer program P comprises routines for controlling the ballast water treatment system by initiating the performing of the modifying action based on the prediction and/or the value for the determined prevailing condition, which ever value reaches its respective reference value first.

The computer program P may further comprise routines for determining the prevailing condition comprises determining a differential pressure over the filter unit and/or flow rate through the filter unit. Further, the computer program P may comprise routines for performing a backflushing operation when the determined differential pressure (PD) differs from the reference value (RV) but does not reach a critical value (CV) for the differential pressure. The computer program P may comprise routines for determining the prevailing condition by further determining a prevailing time between backflushing operations in the filter unit when the backflushing steps are repeated. The computer program P may comprise routines for the control unit (20) is configured to control initiating of the performing of the modifying action comprising increasing the rotational speed of the movable backflush element (55) the higher the predicted and/or the determined differential pressure (PD) is and/or decreasing the flow rate of the ballast water through the filter the higher the predicted and/or the determined differential pressure (PD) is. The computer program P may comprise routines for determining UV-intensity of the UV-reactor as the prevailing operational condition value when the treatment unit (60) is a UV-reactor. The computer program P may comprise routines for decreasing the flow rate through the UV-reactor the lower the predicted and/or the determined UV-intensity is. The computer program P may comprise routines for using linear or non-linear regression for the prediction.

The program P may be stored in an executable form or in a compressed form in a memory 560 and/or in a read/write memory 550.

Where the data processing unit 510 is described as performing a certain function, it means that the data processing unit 510 effects a certain part of the program stored in the memory 560 or a certain part of the program stored in the read/write memory 550.

The data processing device 510 can communicate with a data port 599 via a data bus 515. The non-volatile memory 520 is intended for communication with the data processing unit 510 via a data bus 512. The separate memory 560 is intended to communicate with the data processing unit 510 via a data bus 511. The read/write memory 550 is adapted to communicating with the data processing unit 510 via a data bus 514.

When data are received on the data port 599, they are stored temporarily in the second memory element 540. When input data received have been temporarily stored, the data processing unit 510 is prepared to effect code execution as described above.

Parts of the method herein described may be effected by the control unit 50 by means of the data processing unit 510 which runs the program stored in the memory 560 or the read/write memory 550. When the control unit 50 runs the program, the method herein described are executed.

The foregoing description of the preferred embodiments of the present invention is provided for illustrative and descriptive purposes. It is not intended to be exhaustive or to restrict the invention to the variants described. Many modifications and variations will obviously be apparent to one skilled in the art. The embodiments have been chosen and described in order best to explain the principles of the invention and its practical applications and hence make it possible for specialists to understand the invention for various embodiments and with the various modifications appropriate to the intended use. The invention can be supplemented and modified in any manner within the scope of the invention as defined by the enclosed claims.

## Claims

**1.** A method for controlling a ballast water treatment system (1) comprising a filter unit (40) with a backflushing arrangement (50) comprising a backflush element (55), a treatment unit (60) for neutralizing living organisms in the ballast water and a control unit (20) configured to control the operation of the ballast water treatment system (1), the method comprising:
- determining (s101) a prevailing operational condition value (PCV) relating to the filter unit (40) and/or the treatment unit (60) by means of a sensing means,
- performing (s102) a modifying action in the ballast water treatment system, based on the determined prevailing condition value (PCV),
- tracking (s103) a trend for the development of the prevailing operational condition values (PCV) and/or a frequency for the modifying actions when the steps (s101) and/or (s102) are repeated during a determined time interval,
- predicting (s104) a moment in time (TCV1; TCV2) where a critical value (CV) for the prevailing operational condition value (PCV) is reached based on the tracked trend in the step (s103), and
- controlling (s105) the ballast water treatment system by initiating the performing of the modifying action based on the prediction and/or the value for the determined prevailing condition, which ever value reaches its reference value (RVT; RF, RR) first.

**2.** The method according to claim 1, wherein the method further comprises between the steps (s101) and (s102):
- receiving (s1010) the determined prevailing condition value (PCV) in the control unit (20),
- comparing (s1020) the determined prevailing condition value (PCV) with a reference value (RV) or a reference range (RR) for the prevailing condition in the control unit,
- performing the step (s102) based on the comparison in step (s1020) in which the prevailing operational condition value (PCV) differs from the reference value (RV) or the reference value range (RR).

**3.** The method according to claim 1 or 2, wherein the step (s101) of determining the prevailing condition comprises determining a differential pressure over the filter unit (40).

**4.** The method of claim 3, wherein the modifying action in the step (s105) comprises initiating a backflushing operation when the determined differential pressure (PD) differs from the reference differential pressure (RV) but does not reach a critical value (CV) for the differential pressure.

**5.** The method according to claim 4, wherein the step (s101) of determining the prevailing condition further comprises determining a prevailing time between backflushing operations in the filter unit, when the backflushing steps are repeated.

**6.** The method according to claim 5, wherein the step (s105) comprises increasing the rotational speed of the movable backflush element (55) the higher the predicted and/or the determined differential pressure (PD) is, and/or decreasing the flow rate of the ballast water through the filter the higher the predicted and/or the determined differential pressure (PD) is.

**7.** The method according to any one of the preceding claims, wherein the treatment unit (60) is a UV-reactor comprising one or more UV-lamps, and wherein the step (s101) of determining the prevailing operational condition comprises determining UV-intensity of the UV-reactor.

**8.** The method of claim 7, wherein the step (s105) comprises decreasing the flow rate through the UV-reactor, the lower the predicted and/or the determined UV-intensity is.

**9.** The method according to any one of the preceding claims, wherein in the step (s104) the prediction is based on linear and/or non-linear regression.

**10.** A computer program (P), wherein said computer program comprises program code for causing the control unit (20) or a computer connected to the control unit (20) to perform the steps according to any of the claims 1-9.

**11.** A computer program product comprising a program code stored on a computer-readable medium for performing the method steps according to any of claims 1 -9, when said computer program is run on a control unit (20) or a computer connected to the control unit.

**12.** A control unit (20) configured to control a ballast water treatment system (1) comprising a filter unit (40) with a backflushing element, a treatment unit for neutralizing living organisms in the ballast water, the control unit being configured to:
- determine a prevailing operational condition value (PCV) relating to the filter unit (40) and/or the treatment unit (60) by means of a sensing means,
- perform a modifying action in the ballast water treatment system, based on the determined prevailing condition value (PCV),
- track a trend for the development of the prevailing operational condition values (PCV) and/or a frequency for the modifying actions when the steps to determine a prevailing operational condition value (PCV) and to perform a modifying action in the ballast water treatment system are repeated during a determined time interval,
- predict a moment in time (TCV1; TCV2) where a critical value (CV) for the prevailing operational condition value (PCV) is reached based on the tracked trend in the step (s103), and
- control the ballast water treatment system by initiating the performing of the modifying action based on the prediction and/or the value for the determined prevailing condition, which ever value reaches its reference value (RVT; RF, RR) first.

**13.** The control unit of claim 12 further configured to:
- receive the determined prevailing condition value (PCV) in the control unit (20),
- compare the determined prevailing condition value (PCV) with a reference value (RV) or a reference range (RR) for the prevailing condition in the control unit,
- perform the modifying action based on the prediction and/or the value for the determined prevailing condition, which ever value reaches its reference value (RVT; RF, RR) first.

**13.** The control unit (20) according to claim 12, wherein the control unit (20) is configured to determine the prevailing condition and therein to determine a differential pressure over the filter unit (40).

**14.** The control unit (20) according to claim 13, wherein the control unit (20) is configured to perform a backflushing operation when the determined differential pressure (PD) differs from the reference value (RV) but does not reach a critical value (CV) for the differential pressure.

**15.** The control unit (20) according to claim 14, wherein the control unit (20) is configured to determine the prevailing condition by further determining a prevailing time between backflushing operations in the filter unit, when the backflushing steps are repeated.

**16.** The control unit (20) according to claim 15, wherein the control unit (20) is configured to control initiating of the performing of the modifying action comprising increasing the rotational speed of the movable backflush element (55) the higher the predicted and/or the determined differential pressure (PD) is and/or decreasing the flow rate of the ballast water through the filter the higher the predicted and/or the determined differential pressure (PD) is.

**17.** The control unit (20) according to any one of the preceding claims 12-16, wherein the control unit (20) is configured to determine UV-intensity of the UV-reactor as the prevailing operational condition value, when the treatment unit (60) is a UV-reactor.

**18.** The control unit (20) according to claim 17, wherein the control unit (20) is configured to decrease the flow rate through the UV-reactor the lower the predicted and/or the determined UV-intensity is.

**19.** The control unit (20) according to any one of the preceding claims, wherein the control unit (20) is configured to perform the prediction based on linear and/or non-linear regression.

**20.** The control unit (20) according to any one of the preceding claims 12-19, wherein the control unit (20) is arranged on board the ship or remotely connected to the ship.

**21.** Ballast water treatment system comprising or being connected to the control unit (20) according to any of claims 12-20.
